# EUROPÄISCHE PATENTSCHRIFT

(11) **EP 0 605 580 B1**
(45) Veröffentlichungstag und Bekanntmachung des Hinweises auf die Patenterteilung: **28.08.1996**
(21) Anmeldenummer: 92920615.9
(22) Anmeldetag: 02.10.1992
(51) Int. Cl.: F24D 17/00

(54) **ANLAGE ZUR RÜCKGEWINNUNG VON WÄRME AUS ABWASSER**
PLANT FOR RECUPERATING HEAT FROM WASTE WASTER
INSTALLATION POUR LA RECUPERATION DE LA CHALEUR PROVENANT DES EAUX USEES

(30) Priorität: 04.10.1991 AT 1984/91
(43) Veröffentlichungstag der Anmeldung: 13.07.1994
(73) Patentinhaber: BARTL, Egmont, A-1170 Wien (AT)
(72) Erfinder: BARTL, Egmont, A-1170 Wien (AT)
(74) Vertreter: Wildhack, Helmut, Dipl.-Ing. Dr.
(86) Internationale Anmeldenummer: AT9200125
(87) Internationale Veröffentlichungsnummer: WO9307424

(56) Entgegenhaltungen:
- CA-A- 1 088 512
- DE-A- 3 119 809
- DE-A- 3 202 804

## Beschreibung

Die Erfindung betrifft eine Anlage gemäß dem Oberbegriff des Patentanspruches 1.

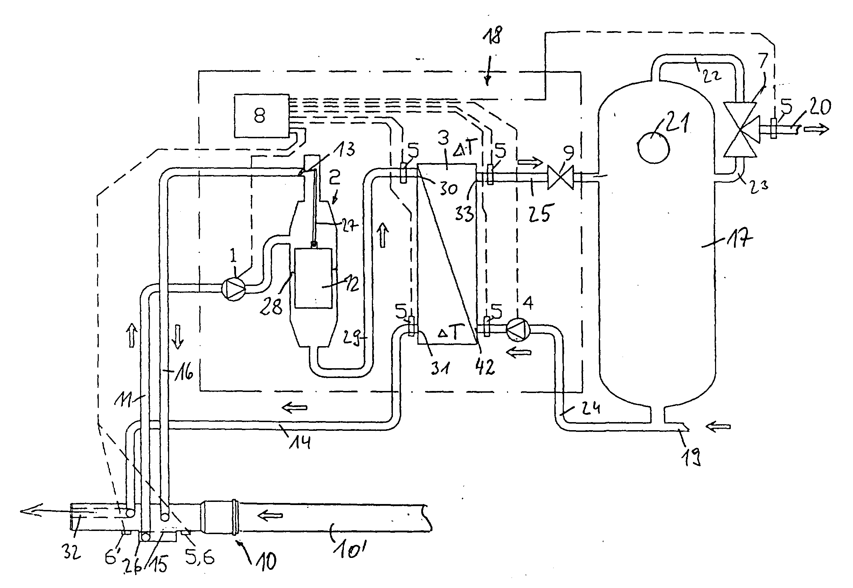

Die DE-A-3 119 809 zeigt in ihrer Figur 1 eine Anlage zur Rückgewinnung von Wärme aus von Haushalten diskontinuierlich anfallendem Abwasser, umfassend zumindest einen vom Abwasser durchflossenen Wärmetauscher, der im Gegenstrom arbeitend in einen Umwälzkreis zumindest eines Warmwasserspeichers bzw. Boilers eingeschaltet ist, wobei in der das Abwasser führenden Abwasserleitung ein auf einen Anfall von Abwasser ansprechender Fühler (Schwimmer ohne Bezugsziffer der Pumpe) vorgesehen ist, der an eine Pumpe angeschlossen ist, mit welcher bei einem einen Abwasseranfall anzeigenden Signal des Fühlers einschaltbaren Pumpe das in der Abwasserleitung festgestellte Abwasser entnommen und durch den Wärmetauscher geführt wird.

Ziel der Erfindung ist es, derartige Anlagen weiterzubilden, damit diese sämtliche haushaltsüblichen Abwässer in chemisch und mechanisch reiner bzw. leicht verschmutzter als auch in schwer verunreinigter Form verarbeiten können, d.h. auch wenn z.B. Seife, Fette, Haare, Waschmittel, chemische Reinigungsmittel, Speisereste usw. in den Abwässern enthalten sind. Ferner soll eine derartige Anlage vollautomatisch arbeiten, möglichst weitgehend wartungsfrei sein, konstruktiv einfach als Gerät für eine Einbaukonzeption zur Verfügung gestellt werden und einen möglichst hohen Wirkungsgrad besitzen.

Erfindungsgemäß werden diese Ziele bei einer Anlage der eingangs genannten Art dadurch erreicht, daß diese Anlage die im Kennzeichen des Patentanspruches 1 angeführten Merkmale aufweist.

Bei einer bevorzugten Ausführungsform ist vorgesehen, daß Temperaturfühler zur Feststellung der Temperatur des in den Wärmetauscher ein- und von diesem abfließenden Abwassers und Speicherwassers, insbesondere in unmittelbarer Nähe der entsprechenden Anschlüsse des Wärmetauschers, vorgesehen sind, welche Temperaturfühler an die Steuereinrichtung angeschlossen sind, mit der die Fördermenge bzw. die Fördergeschwindigkeit der Pumpe und/oder Umwälzleitung für das Speicherwasser liegenden Pumpe in Abhängigkeit von der am Wärmetauscher am Einlaß für das Abwasser und am Auslaß für das Speicherwasser und/oder am Einlaß für das Speicherwasser und am Auslaß für das Abwasser gemessenen bzw. berechneten Temperaturdifferenz steuerbar ist.

Eine weitere vorteilhafte Ausführungsform ist dadurch gekennzeichnet daß ein in eine herkömmliche Abwasserleitung einsetzbares Rohrstück bzw. eine Einbindungseinheit vorgesehen ist, in dem (der) der Abwasserfühler angeordnet ist und in das bzw. die die Saugleitung der Pumpe und stromabwärts von Abwasserabflußleitung des Wärmetauschers einmünden.

Mit dem auf den Wasseranfall ansprechenden Fühler wird die Pumpe der Anlage immer dann eingeschaltet, wenn Abwasser zur Verwertung zur Verfügung steht; nach dem Ende des Abwasseranfalles wird die Pumpe ausgeschaltet. Durch die gesteuerte Zufuhr des warmen Abwassers und die gesteuerte Zufuhr des zu erwärmenden Speicherwassers zum Wärmetauscher wird ein optimaler Wärmeübergang ermöglicht, so daß der Wärmeinhalt des Abwassers optimal ausgenutzt werden kann. Schließlich kann die Anlage als kompakte Einheit geliefert werden, die zwischen einem Boiler und einem leicht in die Abwasserleitung einzubindenden Abwasserrohr eingeschaltet wird.

Bevorzugte Ausführungsformen sind der folgenden Beschreibung, der Zeichnung und den Patentansprüchen zu entnehmen.

In der Zeichnung ist ein schematischer Aufbau einer erfindungsgemäßen Anlage dargestellt.

Die erfindungsgemäße Anlage ist in drei wesentliche Einzelkomponenten aufzuteilen, nämlich einen Boiler 17, ein Hauptgerät, das schematisch mit 18 bezeichnet ist, und eine Einbindungseinheit 10.

Der Boiler 17 umfaßt eine Kaltwasserzuleitung 19 sowie eine zu den Verbrauchern führende Leitung 20. Im oberen Bereich des Boilers ist mit 21 eine beliebige Heizeinrichtung, z.B. elektrische Heizstäbe, angedeutet. Die Anspeisung der zu den Verbrauchern führenden Leitung 20 erfolgt über einen Motormischer 7, zu dem eine Heißwasser führende Leitung 22 und eine vom Abwasser erwärmtes Wasser führende Leitung 23 geführt sind. Die Temperatur in der Leitung 20 wird mittels eines Temperaturfühlers 5 gemessen und von einer Steuereinrichtung bzw. einem Steuerungscomputer 8 ausgewertet; allenfalls wird der Motormischer 7 von der Steuereinrichtung 8 angesteuert.

Eine weitere wesentliche Einrichtung ist die in ein beliebiges Abflußrohr bzw. in eine Abflußleitung einsetzbare Einbindungseinheit 10, die entsprechende an die vorhandene nicht dargestellte Abflußleitung angepaßte Querschnittsform besitzt. Das Hauptgerät 18 umfaßt als wesentliche Baueinheiten die Steuerungseinheit 8, einen Zyklon 2, eine Pumpe 1, einen Wärmetauscher 3, eine weitere Pumpe 4 und allenfalls ein Rückschlagventil 9.

Die Einbindungseinheit 10 besitzt eine nach unten abgehende Vertiefung bzw. Ausbuchtung 26, in die ein Ansaugrohr 11 mündet, das zu der Pumpe 1 führt. Die Ausbuchtung 26 ist nach oben zu mit einem Filter bzw. Filtersieb 15 abgeschlossen, so daß in die Einbindungseinheit 10 eintretendes Abwasser durch das Filter 15 tritt, um zu der Ansaugöffnung der Leitung 11 zu gelangen und dadurch vorgefiltert wird. An sich könnten die von der Einbindungseinheit 10 umfaßten Leitungen, Fühler und Bauteile auch in einer Abwasserleitung ausgebildet bzw. angeordnet werden.

Das von der Pumpe 1 angesaugte warme Abwasser wird in den Zyklon 2 gefördert, in dem ein Schwimmer 12 angeordnet ist, der an seiner Oberseite eine Stange 27 trägt, mit der eine Entlüftungsklappe 13 für eine Entlüftungsleitung 16 verstellt werden kann. Je nach der Menge der mit der Leitung 11 mit dem Abwasser angesaugten Luft steigt oder fällt der Wasserspiegel 28 im Zyklon 2; beim Steigen des Wasserspiegels 18 wird die Entlüftungsklappe 13 geschlossen; bei offener Klappe 13 wird Luft über die Leitung 16 in die Einbindungseinheit 10 zurückgefördert, und zwar an eine Stelle, die strömungsaufwärts von der Ansaugleitung 11 gelegen ist, um mittels der stark warmen Luft zufließendes Abwasser auf Temperatur zu halten und die in der Luft enthaltene Wärme nicht zu vergeuden. Mit dem Schwimmer 12 und der Entlüftungsklappe 13 ist der Druck des Abwassers im Zyklon 2 zu regeln, welches Abwasser über eine Leitung 29 in den entsprechenden Zufuhranschluß 30 des Wärmetauschers 3 eingeführt wird und den Wärmetauscher 3 bei 31 über die Leitung 14 verläßt. Die Leitung 14 mündet stromabwärts des Filters 15 in die Einbindungseinheit; allenfalls kann ein Rohr 32 vorgesehen sein, um das rückfließende, abgekühlte Abwasser möglichst weit von der Ansaugleitung 11 in die Einbindungseinheit einzuleiten, um einen Rückfluß zu vermeiden.

Der Wärmetauscher wird ferner bei einer Zufuhröffnung 42 mit kühlem, aus dem unteren Bereich des Boilers 17 abgezogenem Wasser oder Kaltwasser aus der Leitung 19 über eine Pumpe 4 beschickt. Dieses den Wärmetauscher durchsetzende Wasser verläßt den Wärmetauscher bei der Austrittsöffnung 33 und gelangt über eine Leitung 25 und das Rückschlagventil 9 in den oberen Bereich des Boilers 17, wobei sich im Boiler 17 eine Schichtung des Wassers entsprechend seiner Temperatur ausbildet.

Entsprechend der Entnahme von gewärmtem Wasser aus dem Boiler 17 über die Leitung 20, kann durch die Kaltwasserleitung 19 kaltes Wasser in den Wärmetauscher 3 bzw. in den Boiler 17, und zwar in seinen unteren Bereich, nachströmen.

Die Steuereinrichtung 8 ist an Wassersensoren 6, an Temperatursensoren 5 und an die Pumpen 1 und 4 angeschlossen. Der Wasserfühler 6 stromaufwärts der Saugleitung 11 dient zur Detektion von anfallendem Abwasser und die Steuereinrichtung 8 setzt bei einem entsprechenden Signal dieses Detektors die Pumpe 1 zur Ansaugung des anfallenden Abwassers in Betrieb. Gleichzeitig wird die Temperatur des Abwassers mit einem entsprechenden Temperaturfühler 5 gemessen.

Stromabwärts der Ansaugleitung 11 liegt ein Wasserfühler 6', mit dem festgestellt wird, ob Abwasser bei Betrieb der Pumpe 1 über den Filter 15 hinweggetreten ist; zutreffendenfalls wird dies als Nachweis dafür genommen, daß der Filter 15 verstopft ist. In diesem Falle kehrt die Steuereinrichtung 8 die Förderrichtung der Pumpe 1 um und drückt durch die Leitung 11 bereits angesauges Wasser in die Ausbauchung 26 und spült den Filter 15 entgegen seine Filterrichtung durch, um freien Weg für das Abwasser in die Ausbauchung 26 zur Ansaugung durch die Leitung 11 zu schaffen; die Durchspülung wird einige Zeit aufrechterhalten, um den durchgespülten Schmutz abführen zu können bzw. nach einer Durchspülung wird nicht sofort wieder anfallendes Abwasser angesaugt, sondern zum Abtransport des rückgespülten Schmutzes verwendet.

Die Steuereinrichtung überwacht ferner die Temperaturen an den Einlässen 30 bzw. 42 des Wärmetauschers 3 bzw. an dessen Auslässen 31 und 33. Mittels entsprechender Recheneinheiten bildet die Steuereinrichtung die Differenz der Temperaturwerte am Wärmetauscher 3, und zwar die Differenz am Einlaß 30 für Abwasser und am Auslaß 33 für Warmwasser und/oder die Differenz am Auslaß 31 für Abwasser und am Einlaß 42 für Kaltwasser aus dem Boiler 17 bzw. der Kaltwasserleitung 19.

Die Temperaturdifferenzen ΔT an den entsprechenden Ein- und Auslässen sind ein Maß für den Wärmeübergang vom warmen Abwasser an das kühle, aus dem Boiler 17 bzw. die Kaltwasserleitung 19 zugeführte Wasser. Vorteilhafterweise werden diese bei den festgestellten Temperaturdifferenzen möglichst gleich gehalten; zweckmäßig wird dazu vorgesehen, daß die den Wärmetauscher 3 durchsetzende warme Abwassermenge und die kühle Wassermenge einander dem Volumen nach entsprechen. Diese Volumsentsprechung kann durch Ansteuerung der Pumpe 1 und/oder Pumpe 4 eingestellt werden, indem der Durchsatz des Abwassers und/oder des kühlen Wassers geregelt wird, um die durch den Wärmetauscher in den Abteilungen für Abwasser und für Kaltwasser zirkulierenden Wassermengen pro Zeiteinheit aneinander anzupassen.

Praktisch erfolgt die Messung der Temperaturdifferenzen Δ T mittels zweier Differenzregler z.B. mit PID-Charakter, deren Spannungswerte von der Steuereinrichtung 8 ausgewertet werden.

Die Einbindungseinheit 10 hat mehrere Funktionen; sie dient zur Entnahme des im Ablaufrohrnetz anfallenden Abwassers, sowie zur Rückführung desselben nach dem Wärmetauschprozeß; ferner wird über dieses Anschlußstück 10 die mitangesaugte Luft abgeleitet.

Zur Detektion des Wasseranfalls bzw. der Wassertemperaturen können magnetisch induktive Sensoren vorgesehen werden.

Die Abmessungen der gesamten Einbindungseinheit 10 sind auf einen einfachen Einbau in bestehende Ablaufrohre ausgelegt, so beträgt z.B. die maximale Einbautiefe unter Abflußniveau ca. 2 cm; Anschlüsse bestehen bei der Einbindungseinheit für den Abwassereintritt, für den Abwasseraustritt, für einen Sauganschluß zum Hauptgerät und für eine Wasserrückführung nach dem Wärmetauschprozeß sowie für eine Luftrückführung.

Das Hauptgerät 18 kann als Einbaueinheit ausgelegt sein, so daß ein problemloser Einbau bzw. Umbau, z.B. in eine Küchenzeile unter eine bestehende Arbeitsplatte, erfolgen kann; die Gehäuseabmessungen entsprechen der gängigen Norm für Haushaltsgeräte von 60 x 60 cm und sind ohne weiteres zu erzielen. Ferner ermöglicht das Hauptgerät 18 das nötige Prozeßmanagement, welches erforderlich ist, um dem verunreinigten Abwasser das Maximum an Wärmeenergie zu entziehen und das kalte Frischwasser damit aufzuwärmen.

Die installierten Anlagekomponenten sind schallgedämpft in das Hauptgerät eingebaut; Anschlüsse bestehen kompatibel zur Einbindungseinheit.

Die im Hauptgerät 18 vorgesehenen Pumpen 1 und 4 können zwangsfördernd sein und sind vorteilhafterweise stufenlos regelbar, um entsprechendes Regelverhalten zu gewährleisten.

Vorteilhafterweise wird der Wasserspeicher bzw. Boiler 17 durch das Hauptgerät 18 unter Ausnutzung der Wärmeschichtung im oberen Drittel seines Volumens geladen; im oberen Drittel des Boilers 17 erfolgt vorteilhafterweise die Nachheizung mit der Nachheizeinrichtung 21.

Zur Optimierung des Gesamtwirkungsgrades der Anlage regelt der elektronisch gesteuerte Dreiwegmischer 7 die Entnahmetemperatur auf einen Sollwert ein; durch diese Konzeption ergibt sich beim Zapfen über die Leitung 20 einer beliebigen Menge Warmwassers ein Nachströmen derselben Menge kalten Frischwassers in den Boiler 17 von unten, was infolge bei der Wärmerückgewinnung wieder ein Abkühlen der gesamten Abwassermenge auf das Temperaturniveau des Frischwassers und entsprechende Wärmerückgewinnung ermöglicht.

Wenn Abwasser in die Einbindungseinheit 10 gelangt, wird das Auftreten des Abwassers mittels der magnetisch induktiven Fühler 6 festgestellt und die Temperatur mit dem Fühler 5 gemessen. Aus diesen Meßwerten bildet die Steuereinrichtung 8 im Hauptgerät 18 ein Startargument. Im Falle des Startes wird mittels der Pumpe 1 die gesamte Menge Abwasser durch das rückspülbare Filtersieb 15 gesaugt. Die bei diesem Vorgang zwangsläufig mitgeförderte Luft aus dem Abflußsystem stört aus mehreren Gründen, da bei Stillstand der Anlage dies zur Verkrustung durch trocknenden Schmutz führen kann. Ferner schäumt Wasser mit Spülmittel beim Absaugen aus der Kanalisation,insbesondere bei Vorhandensein von Luft, sehr stark auf. Ein Wasser-Luft-Gemisch (Schaum) hat eine völlig andere spezifische Wärmekapazität als Wasser alleine, wodurch die Regelung des Durchsatzes des Wärmetauschers 3 bzw. der Frischwasserpumpe 4 zur Erzielung einer Gleichheit der Strömungsgeschwindigkeiten von Abwasser und Frischwasser im Wärmetauscher 3 erschwert würde.

Um die Trennung von Wasser und Luft wirkungsvoll, schnell und ohne große Restwasservolumina, die bei Stillstand auskühlen und dadurch die Effizienz der Anlage reduzieren würden, realisieren zu können, wurde der relativ kleine Zyklonabscheider 2 mit entsprechender Dimensionierung vorgesehen. Durch die schwimmergesteuerte Entlüftungs- bzw. Drehklappe 13 ergibt sich am Wärmetauscher 3 ein dem Fördervolumen (Luft und Wasser) der Pumpe 1 bzw. dem Wasserstand im Zyklon 2 entsprechender Druck, der das Abwasser durch den Abwasserteil des Wärmetauschers 3 befördert. Wenn der Wasserstand steigt, weist dies auf eine zu geringe Strömungsgeschwindigkeit durch den Wärmetauscher 3 hin, sodaß der Druck im Zyklon 2 erhöht werden sollte, wozu mit dem sich anhebenden Schwimmer 12 die Entlüftungsöffnung des Zyklons 2 mit der Klappe 13 verschlossen wird. Der Wasserstand könnte auch von der Steuereinrichtung 8 gemessen werden und entsprechend der Luftauslaß verändert werden.

Der Wärmetauscher 3 ist von seiner Bauweise her so gestaltet, daß in ihm gezielt partielle Turbulenzen erzeugt werden, welche ein Anlegen der sich im Abwasser befindlichen Fette und ähnlicher Verunreinigungen während des Abkühlvorganges absolut verhindern, selbst dann, wenn sich keine fettlösenden Mittel im Abwasser befinden.

Das abgekühlte Abwasser und die von der Entlüftung herrührende Luft werden zur Einbindungseinheit 10 und damit zur Kanalisation zurückgeführt; Luft und Wasser werden getrennt geführt, um bei geringer Abwassermenge pro Zeiteinheit (viel mitgeförderte Luft) keine Wirkungsgradeinbuße in Kauf nehmen zu müssen, da die von der Entlüftung herrührende Abluft Wärme beinhaltet, die im Falle der gemeinsamen Rückführung mit dem abgekühlten Abwasser verloren wäre.

Die Reinigung des Filtersiebes 15 ist vorgesehen, um dieses unterschiedlich schnell verschmutzende Filtersieb durchlässig zu halten; Badewasser verschmutzt ein Filtersieb kaum; Waschmaschinenwasser aufgrund der in ihm enthaltenen Flusen relativ rasch. Sobald das Filtersieb für das Abwasser undurchlässig wird, ergibt sich eine Überflutung desselben, was wiederum zu unmittelbar nach dem Filtersieb 15 (in Flußrichtung gesehen) auftretendem Wasser in der Einbindungseinheit 10 führt. Der an dieser Stelle plazierte weitere Wasserdetektor 6' sendet ein entsprechendes Signal an die Steuereinrichtung, welche ihrerseits für kurze Zeit die Pumpe 1 in ihrer Förderrichtung reversiert und dadurch eine äußerst wirksame Rückspülung des Filtersiebes 15 bewirkt, wobei das rückgespülte Wasser durch die Einbindungseinheit 10 abgeführt und in die Kanalisation abgeleitet wird. Ein kurzer Stopp der Ansaugung bzw. der Pumpe 1 vor dem erneuten Starten in normaler Förderrichtung der Pumpe 1, läßt den Schmutz mit dem zur gleichen Zeit durch die Einbindungseinheit 10 durchfließenden Abwasser am Sieb 15 vorbeiströmen, womit verhindert wird, daß die gerade freigespülten Verunreinigungen sofort wieder angesaugt werden und den Filter 15 verstopfen.

Der Gesamtwirkungsgrad der Anlage im Zusammenspiel mit den in einem Haushalt auftretenden unterschiedlichen und voneinander unabhängigen Warmwasserzapf- und Abflußmengen sowie Zeitpunkten und -spannen ist nur dann optimal zu realisieren, wenn die Wassermengen von abfließendem Abwasser und zu erwärmendem Frischwasser aneinander angeglichen werden, vorteilhafterweise jederzeit gleich groß sind, da dann ein optimaler Wärmeübergang und eine optimale Wärmerückgewinnung gewährleistet sind. Um diese Forderung zu erfüllen, mißt die Steuereinrichtung alle Temperaturen, die am im Gegenstrom betriebenen Wärmetauscher 3 auftreten und steuert die stufenlos regelbare Pumpe 1 und/oder die Pumpe 4 in der Art, daß sich zwischen den Meßpunkten 30 und 33 für das warme Abwasser und das warme Frischwasser möglichst die gleiche absolute Temperaturdifferenz Δ T einstellt, wie an den Meßpunkten 31 und 42 für das kalte Abwasser und das kalte Frischwasser.

Die Gleichheit der Wassermengen wird über eine Steuerung der Strömungsgeschwindigkeit nahezu perfekt erreicht; die Querschnitte der Leitungen und des Wärmetauschers sind bekannt, so daß die Strömungsgeschwindigkeit (bzw. der Wasserdruck) der einzige zu regelnde Parameter ist.

Das federbelastete Rückschlagventil 9, das in der Ladeleitung 25 zum Boiler 17 installiert ist, verhindert ein ungewolltes Zirkulieren über den Brauchwasserteil der Anlage, die in Bypaßanordnung mit dem Boiler verbunden ist; dies hätte die Zerstörung der Schichtung im Boiler 17 bei Stillstand bzw. eine unerwünschte Beimischung von Kaltwasser beim Warmwasserabzapfen zur Folge.

Als Siebmaterial für das Filtersieb 17 können verschiedenartige Siebe und Siebmaterialien eingesetzt werden, z.B. Gewebesiebe mit einer Maschenweite von etwa 100 µm.

## Patentansprüche

1. Anlage zur Rückgewinnung von Wärme aus insbesondere von Haushalten, Häusern, Betrieben usw. stammenden, vorzugsweise diskontinuierlich anfallendem Abwasser, umfassend zumindest einen vom Abwasser durchflossenen Wärmetauscher (3), der im Gegenstrom arbeitend in einen Umwälzkreis zumindest eines Warmwasserspeichers bzw. Boilers (17) eingeschaltet ist, wobei in der das Abwasser führenden Abwasserleitung (10') ein auf einen Anfall von Abwasser ansprechender Fühler (6) vorgesehen ist, der an eine zumindest eine Pumpe (1) steuernde Steuereinrichtung (8) angeschlossen ist, mit welcher bei einem einen Abwasseranfall anzeigenden Signal des Fühlers einschaltbaren Pumpe (1) das in der Abwasserleitung (10') festgestellte Abwasser entnommen bzw. abgesaugt und durch den Wärmetauscher (3) gefördert bzw. gepumpt wird, dadurch gekennzeichnet, daß mit der Steuereinrichtung (8) und der das Abwasser fördernden Pumpe (1) der Abwasserdurchsatz durch den Wärmetauscher (3) und mit der Steuereinrichtung (8) und der im Umwälzkreislauf des Speichers (16) liegenden Pumpe (4) der Speicherwasserdurchsatz durch den Wärmetauscher (3) aneinander angeglichen werden und auf ein Mengen- bzw. Durchsatz- bzw. Strömungsgeschwindigkeitsverhältnis von 0,8 bis 1,2, vorzugsweise von etwa 1:1, einregelbar bzw. eingeregelt sind.

2. Anlage nach Anspruch 1, dadurch gekennzeichnet, daß der Fühler (6) in der Abwasserleitung (10') strömungsaufwärts von der Einmündung der Ansaugleitung (11) der zwangsfördernden Pumpe (1) angeordnet ist.

3. Anlage nach Anspruch 1 oder 2, dadurch gekennzeichnet, daß zwischen der Pumpe (1) und dem Wärmetauscher (3) ein Zyklon (2) zur Abscheidung von mit dem Abwasser mitgeförderter Luft angeordnet ist.

4. Anlage nach Anspruch 3, dadurch gekennzeichnet, daß zum Luftauslaß aus dem Zyklon (2) und zur Druckeinstellung des den Zyklon (2) verlassenden Abwassers eine im Bereich des oberen Endes des Zyklons (2) abgehende Luftleitung (16) mit einer vom Wasserstand im Zyklon (2), z.B. mittels eines Schwimmers (12), verstellbaren Entlüftungsklappe (13) verschließbar ist.

5. Anlage nach einem der Ansprüche 1 bis 4, dadurch gekennzeichnet, daß Temperaturfühler (5) zur Feststellung der Temperatur des in den Wärmetauscher (3) ein- und von diesem abfließenden Abwassers und Speicherwassers, insbesondere in unmittelbarer Nähe der entsprechenden Anschlüsse (30,31,32,) des Wärmetauschers (3), vorgesehen sind, welche Temperaturfühler (5) an die Steuereinrichtung (8) angeschlossen sind, mit der die Fördermenge bzw. die Fördergeschwindigkeit der Pumpe (1) und/oder einer in der Umwälzleitung für das Speicherwasser liegenden Pumpe (4) in Abhängigkeit von der am Wärmetauscher (3) am Einlaß (30) für das Abwasser und am Auslaß (33) für das Speicherwasser und/oder am Einlaß (42) für das Speicherwasser und am Auslaß für das Abwasser (31) gemessenen bzw. berechneten Temperaturdifferenzen (ΔT) steuerbar ist.

6. Anlage nach einem der Ansprüche 1 bis 5, dadurch gekennzeichnet, daß ein in eine herkömmliche Abwasserleitung (10') einsetzbares Rohrstück bzw. eine Einbindungseinheit (10) vorgesehen ist, in dem (der) der Abwasserfühler (6) angeordnet ist und in das bzw. die Saugleitung (11) der Pumpe (1) und stromabwärts von dieser die Abwasser-Abflußleitung (14) des Wärmetauschers (3) einmünden.

7. Anlage nach Anspruch 6 dadurch gekennzeichnet, daß im unteren Bereich des Rohrstückes bzw. der Einbindungseinheit (10) eine nach unten abgehende flache Wanne bzw. Ausbauchung (26) ausgebildet ist, in die die zur Pumpe (1) führende Leitung (11) hineinragt.

8. Anlage nach Anspruch 6 oder 7, dadurch gekennzeichnet, daß die flache Wanne bzw. Ausbauchung (26) vom Volumen des Rohrstückes bzw. der Einbindungseinheit (10) mit einem Filter bzw. Filtersieb (15) abgetrennt ist.

9. Anlage nach einem der Ansprüche 3 bis 8 dadurch gekennzeichnet, daß die Pumpe (1) im Gehäuse vor dem Zyklon (2) angeordnet ist.

10. Anlage nach einem der Ansprüche 6 bis 9, dadurch gekennzeichnet, daß der Saugleitung (11) der Pumpe (1) das Abwasser über ein Filter bzw. Filtersieb (15) zugeführt ist.

11. Anlage nach einem der Ansprüche 6 bis 10, dadurch gekennzeichnet, daß in der Einbindungseinheit bzw. in einem Rohrstück (10) stromabwärts der Saugleitung (11) bzw. des Filters (15) ein weiterer Wasserfühler (6') zur Detektion von das Filter (15) überlaufendem, nicht abgesaugten Abwasser vorgesehen ist, welcher weitere Fühler (6) an die Steuereinheit (8) angeschlossen ist, mit der bei Anliegen eines entsprechenden Signals die Förderrichtung der Pumpe (1) zur Durchspülung des Filters (15) mit bereits angesaugtem Abwasser für eine gewisse Zeitspanne umkehrbar ist.

12. Anlage nach einem der Ansprüche 3 bis 11, dadurch gekennzeichnet, daß die an das obere Ende des Zyklons (2) angeschlossene Luftableitung (16) stromaufwärts der Saugleitung (11) für die Pumpe (1) in die Einbindungseinheit bzw. in das Rohrstück (10) einmündet.

13. Anlage nach einem der Ansprüche 6 bis 12, dadurch gekennzeichnet, daß die Einbindungseinheit (10) auf einem tieferen Niveau als der Wärmetauscher (3) und der Boiler bzw. Warmwasserspeicher (16) angeordnet ist.

14. Anlage nach einem der Ansprüche 1 bis 13, dadurch gekennzeichnet, daß der Wärmetauscher (3) in seinem Inneren mit Verwirbelungseinrichtungen bzw. Wirbelkammern zur Vermeidung von Fettablagerungen ausgebildet ist.

15. Anlage nach einem der Ansprüche 8 bis 14, dadurch gekennzeichnet, daß als Filter (15) ein Gewebesiebfilter mit einer Durchlässigkeit von 50 - 200 µm, vorzugsweise von etwa 100 µm, eingesetzt ist.

16. Anlage nach einem der Ansprüche 6 bis 15, dadurch gekennzeichnet, daß das Rohrstück bzw. die Einbindungseinheit (10) auf einem Niveau unterhalb des Gehäuses gelegen ist.

17. Anlage nach einem der Ansprüche 5 bis 16, dadurch gekennzeichnet, daß die Temperaturdifferenzen (Δ T) an den Einlässen (30, 42) und an den Auslässen (31, 33) möglichst gleich gehalten werden.

## Claims

1. A plant for recovering heat from waste water originating in particular from households, houses, factories *etc.* and preferably produced discontinuously, the plant comprising at least one heat exchanger (3) which is traversed by the waste water and which is arranged operating in counterflow in a circulating circuit of at least one hot-water reservoir or boiler (17), wherein a sensor (6), which responds to the occurrence of waste water and which is connected to a control device (8) controlling at least one pump (1), is provided in the waste-water line (10') conveying the waste water, and, by means of the pump (1) which is switched on with a signal from the sensor indicating the occurrence of waste water, the waste water detected in the waste-water line (10') is removed or sucked away and is conveyed or pumped through the heat exchanger (3), **characterized in that** - with the control device (8) and the pump (1) which conveys the waste water - the throughput of waste water through the heat exchanger (3) and - with the control device (8) and the pump (4) situated in the circulating circuit of the reservoir (16) - the throughput of reservoir water through the heat exchanger (3) are adjusted to each other, and can be set or are set to a quantity or throughput or flow-velocity ratio of from 0·8 to 1·2, preferably approximately 1 : 1.

2. A plant according to Claim 1, **characterized in that** the sensor (6) is arranged in the waste-water line (10') upstream of the opening of the suction line (11) of the force-flow conveying pump (1).

3. A plant according to Claim 1 or 2, **characterized in that** a cyclone (2) for separating air jointly conveyed with the waste water is arranged between the pump (1) and the heat exchanger (3).

4. A plant according to Claim 3, **characterized in that,** in order to let air out of the cyclone (2) and to set the pressure of the waste water leaving the cyclone (2), an air line (16) emerging in the region of the upper end of the cyclone (2) can be closed by an aerating valve (13) displaceable by the water level in the cyclone (2), for example by means of a float (12).

5. A plant according to one of Claims 1 to 4, **characterized in that** temperature gauges (5) are provided for detecting the temperature of the waste water and reservoir water flowing into and out of the heat exchanger (3), in particular in the immediate vicinity of the corresponding connexions (30, 31, 32) of the heat exchanger (3), the temperature gauges (5) being connected to the control device (8) by which the conveyed quantity or the conveying speed of the pump (1) and/or a pump (4) situated in the circulation line for the reservoir water can be controlled as a function of the temperature differences (ΔT) measured or calculated on the heat exchanger (3) at the inlet (30) for the waste water and at the outlet (33) for the reservoir water and/or at the inlet (42) for the reservoir water and at the outlet for the waste water (31).

6. A plant according to one of Claims 1 to 5, **characterized in that** a tube member or a fixing-in unit (10) is provided, which can be inserted in a conventional waste-water line (10') and in which the waste-water sensor (6) is arranged and into which the suction line (11) of the pump (1) and downstream thereof the waste-water outflow line (14) of the heat exchanger (3) open.

7. A plant according to Claim 6, **characterized in that** a downwardly directed flat bowl or bulge (26), into which the line (11) leading to the pump (1) projects, is formed in the lower region of the tube member or the fixing-in unit (10).

8. A plant according to Claim 6 or 7, **characterized in that** the flat bowl or bulge (26) is separated from the volume of the tube member or the fixing-in unit (10) by a filter or filter screen (15).

9. A plant according to one of Claims 3 to 8, **characterized in that** the pump (1) is arranged in the housing upstream of the cyclone (2).

10. A plant according to one of Claims 6 to 9, **characterized in that** the waste water is conveyed to the suction line (11) of the pump (1) by way of a filter of filter screen (15).

11. A plant according to one of Claims 6 to 10, **characterized in that** a further water sensor (6') for detecting waste water not sucked away and flowing over the filter (15) is provided in the fixing-in unit or in a tube member (10) downstream of the suction line (11) or the filter (15), the further sensor (6) [*sic*] being connected to the control unit (8) by which the conveying direction of the pump (1) can be reversed for a certain period when a corresponding signal is applied in order to rinse the filter (15) with waste water already sucked in.

12. A plant according to one of Claims 3 to 11, **characterized in that** the air outlet line (16) connected to the upper end of the cyclone (2) opens into the fixing-in unit or the tube member (10) downstream of the suction line (11) for the pump (1).

13. A plant according to one of Claims 6 to 12, **characterized in that** the fixing-in unit (10) is arranged at a lower level than the heat exchanger (3) and the boiler or hot-water reservoir (16).

14. A plant according to one of Claims I to 13, **characterized in that** the interior of the heat exchanger (3) is formed with swirling devices or swirl chambers in order to prevent the deposit of grease.

15. A plant according to one of Claims 8 to 14, **characterized in that** a fabric screen filter with a permeability of from 50 to 200 µm, preferably approximately 100 µm, is used as the filter (15).

16. A plant according to one of Claims 6 to 15, **characterized in that** the tube member or the fixing-in unit (10) is positioned at a level below the housing.

17. A plant according to one of Claims 5 to 16, **characterized in that** the differences (ΔT) of the temperature at the inlets (30, 42) and at the outlets (31, 33) are maintained as equal as possible.

## Revendications

1. Installation permettant la récupération de chaleur à partir d'eaux usées produites de préférence d'une manière discontinue, provenant notamment de logements, maisons, entreprises, etc., comprenant au moins un échangeur de chaleur (3) qui est traversé par les eaux usées et qui est interposé dans un circuit de circulation d'au moins un accumulateur d'eau chaude ou d'une chaudière (17) en travaillant à contre-courant, tandis que, dans la conduite d'eaux usées (10') transportant les eaux usées, il est prévu un détecteur (6) qui réagit à une production d'eaux usées et qui est raccordé à un dispositif de commande (8) qui commande au moins une pompe (1) qui est agencée de façon à pouvoir être mise en marche par un signal du détecteur indiquant une production d'eaux usées et au moyen de laquelle les eaux usées dont la présence a été déterminée dans la conduite d'eaux usées (10') sont prélevées ou aspirées et refoulées ou pompées à travers l'échangeur de chaleur (3), caractérisée en ce que le débit d'eaux usées traversant l'échangeur de chaleur (3), au moyen du dispositif de commande (8) et de la pompe (1) refoulant les eaux usées, et le débit d'eau d'accumulateur traversant l'échangeur de chaleur (3), au moyen du dispositif de commande (8) et de la pompe (4) située dans le circuit de circulation de l'accumulateur (17), sont amenés au même niveau l'un que l'autre et peuvent être réglés ou sont réglés à un rapport de quantité, de débit ou de vitesse d'écoulement de 0,8 à 1,2, de préférence de 1 : 1 environ.

2. Installation selon la revendication 1, caractérisée en ce que le détecteur (6) est disposé dans la conduite d'eaux usées (10') en amont du débouché de la tuyauterie d'aspiration (11) de la pompe (1) à refoulement forcé.

3. Installation selon la revendication 1 ou 2, caractérisée en ce qu'un cyclone (2) est disposé entre la pompe (1) et l'échangeur de chaleur (3) en vue de la séparation de l'air entraîné avec les eaux usées.

4. Installation selon la revendication 3, caractérisée en ce qu'en vue d'extraire l'air du cyclone (2) et de régler la pression des eaux usées quittant le cyclone (2), il est prévu une tuyauterie d'air (16), partant de la zone de l'extrémité supérieure du cyclone (2), qui est agencée de façon à pouvoir être fermée au moyen d'un volet d'évacuation d'air (13) dont la position peut être réglée par le niveau d'eau dans le cyclone (2), par exemple au moyen d'un flotteur (12).

5. Installation selon l'une des revendications 1 à 4, caractérisée en ce qu'il est prévu des capteurs de température (5) servant à déterminer la température des eaux usées, entrant dans l'échangeur de chaleur (3) et sortant de ce dernier, et de l'eau d'accumulateur, notamment au voisinage direct des raccords correspondants (30, 31, 33, 42) de l'échangeur de chaleur (3), ces capteurs de température (5) étant raccordés au dispositif de commande (8) au moyen duquel le débit ou la vitesse de refoulement de la pompe (1) et/ou d'une pompe (4) située dans la tuyauterie de circulation prévue pour l'eau d'accumulateur peut être commandé en fonction des différences de température (ΔT) calculées ou mesurées sur l'échangeur de chaleur (3) à l'entrée (30) prévue pour les eaux usées et à la sortie (33) prévue pour l'eau d'accumulateur et/ou à l'entrée (42) prévue pour l'eau d'accumulateur et à la sortie (31) prévue pour les eaux usées.

6. Installation selon l'une des revendications 1 à 5, caractérisée en ce qu'il est prévu un tronçon de tuyau agencé de façon à pouvoir être inséré dans une conduite d'eaux usées (10') classique ou une unité d'insertion (10) dans lequel ou laquelle le détecteur d'eaux usées (6) est disposé et dans lequel ou laquelle débouchent la tuyauterie d'aspiration (11) de la pompe (1) et, en aval de cette dernière, la tuyauterie d'évacuation d'eaux usées (14) de l'échangeur de chaleur (3).

7. Installation selon la revendication 6, caractérisée en ce que, dans la partie inférieure du tronçon de tuyau ou de l'unité d'insertion (10), il est formé une partie renflée (26) ou cuvette de faible profondeur disposée vers le bas et dans laquelle la tuyauterie (11) menant à la pompe (1) fait saillie.

8. Installation selon la revendication 6 ou 7, caractérisée en ce que la partie renflée (26) ou cuvette de faible profondeur est séparée du volume du tronçon de tuyau ou de l'unité d'insertion (10) par un filtre ou tamis de filtration (15).

9. Installation selon l'une des revendications 3 à 8, caractérisée en ce que la pompe (1) est disposée dans le boîtier en amont du cyclone (2).

10. Installation selon l'une des revendications 6 à 9, caractérisée en ce que les eaux usées sont envoyées à la tuyauterie d'aspiration (11) de la pompe (1) en passant sur un filtre ou un tamis de filtration (15).

11. Installation selon l'une des revendications 6 à 10, caractérisée en ce que, dans l'unité d'insertion ou dans un tronçon de tuyau (10), il est prévu, en aval de la tuyauterie d'aspiration (11) ou du filtre (15), un autre détecteur d'eau (6') servant à détecter les eaux usées non aspirées qui passent au-dessus du filtre (15), cet autre détecteur (6') étant raccordé à l'unité de commande (8) au moyen de laquelle, lorsqu'il se présente un signal correspondant, le sens de refoulement de la pompe (1) peut être inversé pendant une certaine période de temps pour le nettoyage du filtre (15) par traversée au moyen-d'eaux usées déjà aspirées.

12. Installation selon l'une des revendications 3 à 11, caractérisée en ce que la tuyauterie d'évacuation d'air (16) raccordée à l'extrémité supérieure du cyclone (2) débouche dans l'unité d'insertion ou dans le tronçon de tuyau (10) en amont de la tuyauterie d'aspiration (11) prévue pour la pompe (1).

13. Installation selon l'une des revendications 6 à 12, caractérisée en ce que l'unité d'insertion (10) est disposée à un niveau plus bas que l'échangeur de chaleur (3) et la chaudière ou l'accumulateur d'eau chaude (16).

14. Installation selon l'une des revendications 1 à 13, caractérisée en ce que l'échangeur de chaleur (3) comprend intérieurement des dispositifs de mise en turbulence ou des chambres de turbulence servant à éviter des dépôts de graisses.

15. Installation selon l'une des revendications 8 à 14, caractérisée en ce qu'un filtre à tamis tissé présentant une capacité de passage de 50 - 200 µm, de préférence de 100 µm environ, est utilisé en tant que filtre (15).

16. Installation selon l'une des revendications 6 à 15, caractérisée en ce que le tronçon de tuyau ou l'unité d'insertion (10) est placé à un niveau situé au-dessous du boîtier.

17. Installation selon l'une des revendications 5 à 16, caractérisée en ce que les differences (ΔT) de la temperature aux entrées (30) et aux sorties sont maintennes de même grandeur que possible.
